# EUROPEAN PATENT APPLICATION

(11) **EP 3 616 542 A1**
(43) Date of publication of application: **04.03.2020**
(21) Application number: 17907578.3
(22) Date of filing: 26.12.2017
(51) Int. Cl.: A42B 1/02, A42C 1/02, A42C 1/04, A42C 1/08, A42C 1/00

(54) **HAT WITH SEAMLESS TOP OF HAT AND MANUFACTURING METHOD THEREFOR**

(30) Priority: 24.04.2017 CN 201710271101
(71) Applicant: Zhang, Yingqing, Nanjing, Jiangsu 210001 (CN)
(72) Inventor: Zhang, Yingqing, Nanjing, Jiangsu 210001 (CN)
(74) Representative: Boult Wade Tennant LLP
(86) International application number: PCT/CN2017/118613
(87) International publication number: WO 2018/196423

(57) **Abstract**

Disclosed are a cap and a manufacturing method therefor and a cap top shaping device, the cap comprising: a seamless cap top without seams, wherein same is integrally formed by hot stretching a piece of a flat knitted fabric blank containing a vitrifiable petroleum chemical fibre material; and a bongrace jointed to the seamless cap top. The cap top of the cap can save on the production time and cost. The cap top of the cap can be made into various cap types and a variety of raw materials can be selected for same. The cap top of the cap is a cap top without seams, completely fitting the user's head form, and can be made by selecting a breathable material, thereby improving the aesthetics and comfort when wearing same.

## Description

### Technical Field

The present disclosure relates to a cap, and more particularly, to a cap having a seamless cap top and a method for manufacturing the same.

### Background Art

A cap is a fashion item worn on the head for covering the entire head top. The cap is mainly used to protect a user's head. Some caps have an extended cap brim in order to block sunlight. The cap may also be used as an accessory for dressing.

In the related art, the cap top of the cap is manufactured by stitching a little fabric that has been cut into a fan shape in many cases. However, since such a process requires various processes such as cap-piece splitting, bonding and sewing, it is not possible to save the manufacturing time and the manufacturing cost due to the lengthened manufacturing process. In addition, the manufactured cap top may have seam marks on the exterior, is likely to wrinkles, and may not fully be in close contact with the shape of the user's head, thereby affecting the beauty and the comfort when worn.

CN105747343A discloses the cap in which the cap brim and the cap top are integrally molded, and the cap top of the cap is formed by performing the thermo compression bonding between the positive mold and the negative mold whose shapes are complementary to each other for at least two layers of flexible materials such as a sponge, a TPU, a PPC and a PU. In order to prevent the occurrence of wrinkles, the material leaves two and three openings before the thermo compression bonding, and the openings are sewed after the thermo compression bonding. Therefore, the process may not save the manufacturing time and the manufacturing cost because it requires additional processes such as opening and sewing. Since the manufactured cap top also has seam marks on the exterior, it affects the beauty when worn. In addition, since the cap top made of the materials such as a sponge, a TPU, a PPC and a PU have poor ventilation, it affects the comfort when worn.

CN106049072A discloses the method for manufacturing the polyester felt cap, and the felt cap is formed by extruding two layers of thermally-treated polyester cloth by the pressure between the positive mold and the negative mold whose shapes are complementary to each other. The method may be used only for manufacturing the felt cap, and the raw material may be selected only with polyester, such that the type and the raw material of the manufactured cap are limited. The felt cap has to undergo an asynchronous manufacturing process in which the fabric is first heated and then the fabric is pressurized, and it does not help to save the manufacturing time and the manufacturing cost.

An object of the present disclosure is to provide a novel cap and a method for manufacturing the same, which overcome the drawbacks of the related art and have a seamless cap top. The cap top of the cap of the present disclosure may save the manufacturing time and the manufacturing cost without a number of extra processes such as cap piece splitting, bonding, sewing, or opening, sewing, or extruding the fabric after heating the fabric. The cap top of the cap of the present disclosure may be manufactured in various types of caps, and may be selected from various raw materials. The cap top of the cap of the present disclosure is a seamless cap top without seams, is fully in close contact with the shape of the user's head, and is made of a breathable material, thereby improving the beauty and the comfort when worn.

### SUMMARY

A first aspect of the present disclosure includes a seamless cap top without seams and a cap brim bonded to the seamless cap top. The seamless cap top is integrally molded by hot-stretching one flat knitted fabric blank by a cap top molding machine, and the knitted fabric blank includes a vitrification-available petrochemical fiber material. Disclosed is a method for manufacturing a cap in which the cap top molding machine includes a punch; a chamber facing the punch and opened to receive the punch; and a fabric holding member for holding the knitted fabric blank in a cap top molding process. The method for manufacturing the cap includes heating the punch at the temperature equal to or higher than the vitrification temperature of the petrochemical fiber material and lower than the melting point temperature of the petrochemical fiber material; seating so that the central portion of the knitted fabric blank fully covers the opened opening of the chamber; stretching the knitted fabric blank in a shape matching with the outer contour of the punch by moving the punch toward the inside of the chamber through the opening of the chamber until the punch reaches a cap top molding position, while the periphery of the knitted fabric blank is held by the fabric holding member; staying the punch at the cap top molding position for a predetermined time; cooling it by moving the punch from the inside of the chamber, and removing the molded cap top from the upper portion of the chamber; and forming a cap by bonding the cap top and the cap brim together. Preferably, during the stretching of the knitted fabric blank, a gap is present between the punch and the opening, and the width of the gap is uniformly maintained. Preferably, the width of the gap is controlled between 0.6mm and 3mm during the stretching of the knitted fabric blank.

Preferably, while the punch stays at the cap top molding position, the petrochemical fiber material is converted from a high elastic state to a glass state at the temperature equal to or higher than the vitrification temperature thereof and lower than the melting point temperature thereof so that the knitted fabric blank is fully aligned on the outer contour of the punch.

Preferably, the predetermined time is 30 seconds to 70 seconds.

Preferably, the bonding includes sewing the cap brim and the cap top together.

Preferably, the chamber is heated at the temperature equal to or higher than the vitrification temperature of the petrochemical fiber material and lower than the melting point temperature of the petrochemical fiber material, while heating the punch.

Preferably, before the seating, the knitted fabric blank is cut into the shape and the size suitable for holding the knitted fabric blank by the fabric holding member. Preferably, before the seating, water is sprayed to the knitted fabric blank. Preferably, after the cooling and before the bonding, the extra portion of the bottom of the cap top is removed.

Preferably, after the cooling and before the bonding, or after the bonding, a decorative process such as embroidery, printing, transfer thermo compression ironing, or decorative flower sewing for the cap top is performed.

Preferably, after the cooling and before the bonding, a lining is aligned inside the cap top, and the edge of the lining is covered by an adhesive pressing strip to stiffen the cap top.

Preferably, the knitted fabric blank includes a single layer or a plurality of layers of knitted fabrics.

Preferably, the single layer or at least one layer of the plurality of layers of knitted fabrics has the vitrification-available petrochemical fiber material.

Preferably, the single layer or at least one layer of the plurality of layers of knitted fabrics has 5% to 100% contents of the vitrification-available petrochemical fiber material.

Preferably, the vitrification-available petrochemical fiber material is selected from a group consisting of polyester, nylon, spandex, and acrylic.

Preferably, after the cooling and before the bonding, the adhesive pressing strip is fixed to the edge of the bottom of the cap top by an adhesive pressing machine.

Preferably, the adhesive pressing machine includes an upper wheel and a lower wheel, and the upper wheel supplies the adhesive pressing strip to a gap between the upper wheel and the lower wheel, and the lower wheel supplies the edge of the bottom of the cap top to the gap between the upper wheel and the lower wheel. Preferably, the RPM of the upper wheel and the RPM of the lower wheel are different from each other.

Preferably, the adhesive pressing strip is manufactured by aligning a hot melt adhesive agent by using elastic fabric or banding.

Preferably, the cap brim is made of a stacked material including a TPU material layer, and two fabric layers aligned on the TPU material layer from the upper portion and the lower portion thereof.

A second aspect of the present disclosure discloses a cap manufactured according to the method described in the above-described aspect.

A third aspect of the present disclosure discloses a cap including a seamless cap top without seams integrally molded by hot-stretching one flat knitted fabric blank including a vitrification-available petrochemical fiber material; and a cap brim bonded to the seamless cap top.

Preferably, a lining is aligned inside the cap top, and an adhesive pressing strip for covering the edge of the lining is provided to stiffen the cap top.

Preferably, the cap top is provided with a decorative member such as embroidery, printing, transfer thermo compression ironing, or sewed decorative flower. Preferably, the cap top is a seamless cap top integrally molded by hot-stretching the flat knitted fabric blank at the temperature equal to or higher than the vitrification temperature of the petrochemical fiber material and lower than the melting point temperature of the petrochemical fiber material.

Preferably, the knitted fabric blank includes a single layer or a plurality of layers of knitted fabrics.

Preferably, the single layer or at least one layer of the plurality of layers of knitted fabrics has the vitrification-available petrochemical fiber material.

Preferably, the single layer or at least one layer of the plurality of layers of knitted fabrics has 5% to 100% contents of the vitrification-available petrochemical fiber material.

Preferably, the vitrification-available petrochemical fiber material is selected from a group consisting of polyester, nylon, spandex, and acrylic.

Preferably, the adhesive pressing strip is fixed to the edge of the bottom of the cap top.

Preferably, the adhesive pressing strip is manufactured by aligning a hot melt adhesive agent by using elastic fabric or banding.

Preferably, the cap brim is made of a stacked material including a TPU material layer, and two fabric layers aligned on the TPU material layer from the upper portion and the lower portion thereof.

A fourth aspect of the present disclosure discloses a cap top molding machine for manufacturing a seamless cap top without seams in which the seamless cap top is integrally molded by hot-stretching one flat knitted fabric blank, and the knitted fabric blank includes a vitrification-available petrochemical fiber material. The cap top molding machine includes a molding device and a support device, and the molding device includes a base; a punch fixed to the lower portion of the base, and for hot-stretching the knitted fabric blank of the seamless cap top in a desired shape by providing the shape matching with the seamless cap top; and a fabric holding member slidably connected to the base, and for holding the periphery of the cap top knitted fabric blank in a cap top molding process. The support device is disposed on the vertical lower portion of the molding device, and includes a housing and a chamber inwards recessed and opened from the housing, and the opening of the chamber faces the punch, and the chamber fully receives the punch entering through the opening.

Preferably, in the process of hot-stretching the knitted fabric blank, the punch enters the chamber through the opening, a gap is present between the punch and the opening, and the width of the gap is uniformly maintained.

Preferably, in the process of hot-stretching the knitted fabric blank, the width of the gap is controlled between 0.6mm and 3mm.

Preferably, the fabric holding member includes a holding frame for holding the periphery of the cap top knitted fabric blank in the cap top molding process; a guide rod fixed to the holding frame, and for guiding so that the holding frame vertically moves with respect to the base; and a spring device installed between the base and the holding frame.

### Description of Drawings

Various aspects and features of the present disclosure are described with reference to the drawings.
FIG. 1 is a perspective diagram of a cap according to the present disclosure.
FIG. 2 is a perspective diagram of a cap top molding machine according to the present disclosure.
FIGS. 3a and 3b are a perspective diagram and a cross-sectional diagram of a molding device of the cap top molding machine according to the present disclosure, respectively.
FIGS. 4a and 4b are a perspective diagram and a cross-sectional diagram of a support device of the cap top molding machine according to the present disclosure, respectively.
FIGS. 5a to 5e are schematic diagrams illustrating steps in which the cap top molding machine according to the present disclosure manufactures the cap top and the cap.
FIG. 6 is a perspective diagram of the cap top manufactured by the cap top molding machine according to the present disclosure.
FIGS. 7a and 7b are a perspective diagram and a side surface diagram of an adhesive pressing machine according to the present disclosure.
FIG. 8 is a perspective diagram of the cap top after the adhesive pressing machine according to the present disclosure aligns an adhesive pressing strip.

### Best Mode

Hereinafter, embodiments of the present disclosure will be described with reference to the drawings. It should be understood, however, that the present disclosure is not limited to the details of structures or operating steps described below. The present disclosure may have other embodiments, and may be practiced or carried out in various forms.

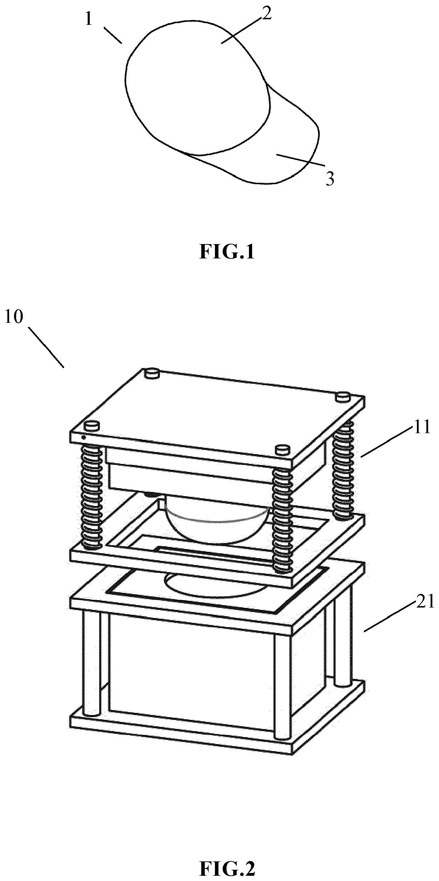

FIG. 1 illustrates a cap 1 including a seamless cap top 2 having no any seams on a main body portion according to an embodiment of the present disclosure, and a cap brim 3 bonded to the seamless cap top 2 by a process such as sewing. The seamless cap top 2 is integrally molded by a hot stretching process of a cap top molding machine 10 (see FIG. 2, which will be described in detail below), and may be an approximately hemispherical shape, an approximately semi-elliptical shape, an approximately cylindrical shape, or an approximately truncated cone shape. If necessary, it may also have various shapes, for example, an animation shape suitable for a child. The cap brim 3 may be manufactured in a duck tongue shape, a truncated cone shape or any other suitable shape as long as it may be bonded to the cap top 2. As described above, the related art forms a cap top by pressurizing or extruding the material previously seated in the gap between a positive mold and a negative mold by the pressure between the positive mold and the negative mold whose shapes are complementary to each other. However, the present disclosure uses the tensile force of a punch of the cap top molding machine (a corresponding die is not required) in order to hot-stretch one flat fabric in a shape matching the outer contour of the punch. For this purpose, the seamless cap top 2 of the present disclosure selects elastic knitted fabric rather than non-elastic woven fabric. In addition, in order to better align the knitted fabric on the outer contour of the punch in the hot stretching process, the knitted fabric may preferably include 5% to 100% contents of a vitrification-available petrochemical fiber material such as polyester, nylon, spandex, or acrylic. The cap brim 3 may be selected and blended with any suitable fabric.

As illustrated in FIG. 2, the seamless cap top 2 is integrally molded by the cap top molding machine 10. The cap top molding machine 10 includes a molding device 11 and a support device 21 disposed at the vertical lower portion of the molding device 11.

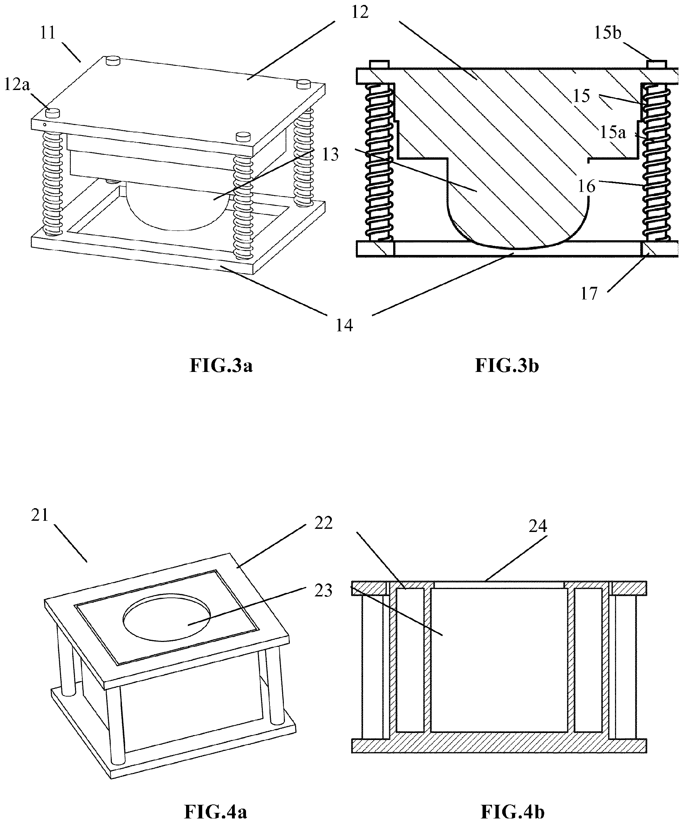

Referring to FIGS. 3a and 3b, the molding device 11 is used for molding the seamless cap top 2 by a hot stretching method, and includes a base 12, a punch 13 and a fabric holding member 14. The base 12 guides so that the entire molding device 11 is vertically moved between an initial position of the upper portion thereof and a cap top molding position of the lower portion thereof by a driving device (not illustrated). The punch 13 is fixed to the lower portion of the base 12, and has a shape matching with the cap top 2 in order to hot-stretch a fabric blank (the blank means an unfinished cloth, a raw material before a product, or the like) of the cap top in a desired shape. A heating device for heating the punch 13, such as a resistive heat-generating wire, may be installed inside or outside the punch 13.

The fabric holding member 14 is for holding the periphery of the cap top fabric blank on the uppermost surface of the support device 21 in the cap top molding process, and includes a guide rod 15, a spring device 16, and a holding frame 17. The guide rod 15 includes a straight-line rod main body 15a having a uniform size and a flange 15b horizontally protruded from the upper end of the rod main body 15a or other protruded members. The rod main body 15a has a smaller size than a through-hole 12a around the base 12, and the flange 15b has a larger size than the through-hole 12a, such that the rod main body 15a may vertically move within the through-hole 12a, but may not pass through the through-hole 12a in the flange 15b. The holding frame 17 is fixed to the lower end of the rod main body 15a. The height of the rod main body 15a is calculated from the lower surface of the base 12. The vertical height of the punch 13 is calculated from the lower surface of the base 12. Therefore, since the vertical height of the rod main body 15a is greater than the vertical height of the punch 13, at the initial position, the punch 13 is limited within the space formed by the base 12, the guide rod 15, and the holding frame 17. The spring device 16 is installed between the base 12 and the holding frame 17, and holds the periphery of the cap top fabric blank between the holding frame 17 and the uppermost surface of the support device 21 by contacting with the base 12 in a state where the pressure has been applied thereto to apply the pressure to the holding frame 17. In a preferred embodiment, the spring device 16 may be a coil spring of the rod main body 15a surrounding the guide rod 15.

Referring to FIGS. 4a and 4b, the support device 21 supports the cap top fabric blank in the cap top molding process, and includes a housing 22 and a chamber 23 inwards recessed and opened from the central portion of the uppermost surface of the housing 22. An opening 24 of the chamber 23 faces the punch 13, and the chamber 23 may fully receive the punch 13, but it is not necessary to install a die that is complementary to the shape of the punch 13. The molding device 11 uniformly holds the width of the gap between the opening 24 of the chamber 23 and the outer contour of the punch 13 so that the punch 13 may uniformly stretch the cap top fabric blank downwards in the downward guide process to the cap top molding position by the driving device. In a preferred embodiment, the heating device (not illustrated) for heating the chamber 23 is installed inside or outside the support device 21.

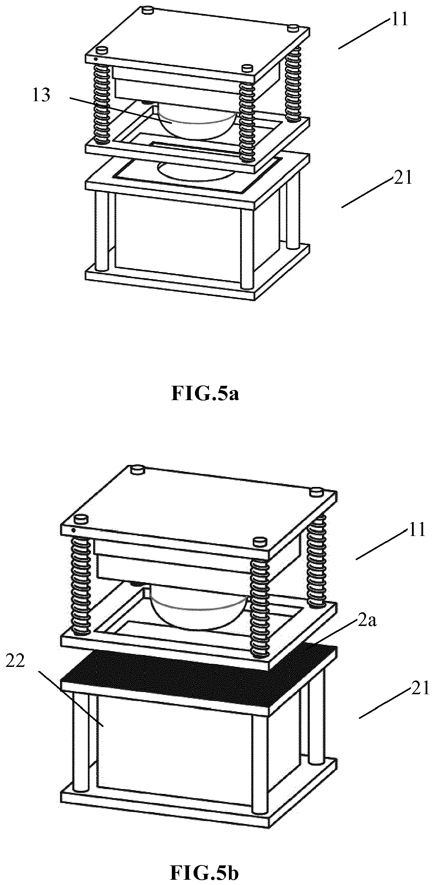

Hereinafter, a method for manufacturing the seamless cap top 2 by the cap top molding machine 10 will be described with reference to FIGS. 5a to 5e. First, a fabric suitable for manufacturing the seamless cap top 2 is selected. As described above, the cap top fabric blank 2a of the seamless cap top 2 may select a single layer or a plurality of layers of flat knitted fabrics. When the cap top fabric blank 2a is a single layer of knitted fabric, the single layer of knitted fabric includes 5% to 100% of a vitrification-available petrochemical fiber material such as polyester, nylon, spandex, or acrylic. When the cap top fabric blank 2a is a plurality of layers of knitted fabrics, at least one layer of the plurality of layers of knitted fabrics includes 5% to 100% of a vitrification-available petrochemical fiber material, and other layers may be cotton fabric or other fabrics.

Then, the fabric of the cap top 2 is cut. The cap top fabric blank 2a of the seamless cap top 2 is cut greater than the shape and the size of the holding frame 17 such as a rectangular shape or an elliptical shape so that the holding frame 17 holds the periphery of the cap top fabric blank 2a in the cap top molding process to uniformly enter the cap top fabric blank 2a into the chamber 23 at a controllable speed.

As illustrated in FIG. 5a, the punch 13 is heated at the temperature equal to or higher than the vitrification temperature of the petrochemical fiber material and lower than the melting point temperature of the petrochemical fiber material by the heating device (not illustrated). In a preferred embodiment, the chamber 23 is heated at the temperature equal to or higher than the vitrification temperature of the petrochemical fiber material and lower than the melting point temperature of the petrochemical fiber material. When water is sprayed on the cap top fabric blank 2a by using an air brush so that the cap top fabric blank 2a contacts with the heated punch 13, water is sprayed at a high temperature to permeate into the cap top fabric blank 2a so that the whole cap top fabric blank 2a is uniformly heat-transferred, thereby advantageously stabilizing the shape of the cap top 2.

As illustrated in FIG. 5b, the water-sprayed cap top fabric blank 2a is flatly seated on the uppermost surface of the housing 22 of the support device 21 to flatten it, and the central portion of the cap top fabric blank 2a fully covers the opening 24 of the chamber 23.

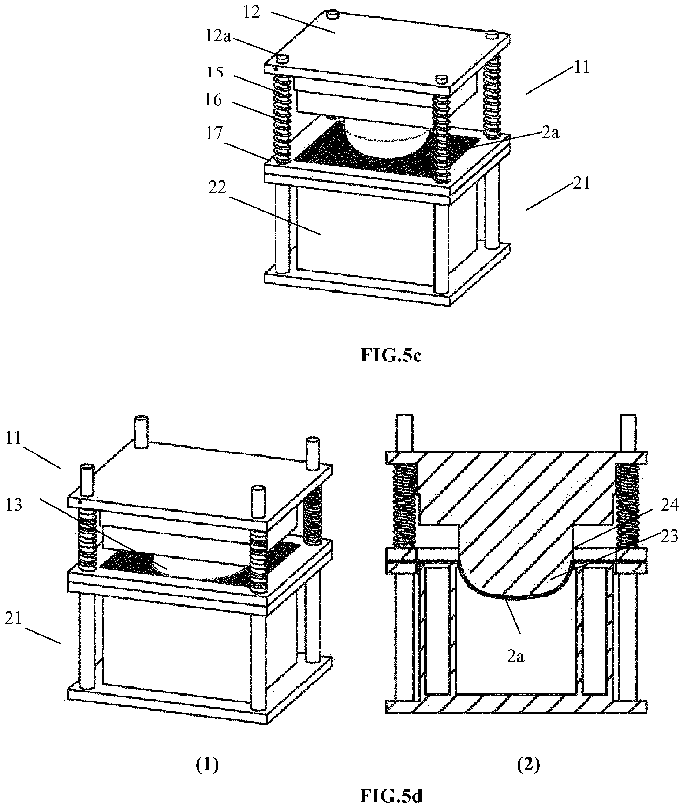

As illustrated in FIG. 5c, the driving device (not illustrated) of the molding device 11 is operated so that the molding device 11 vertically moves downwards from the initial position thereof toward the support device 21 to be driven until the holding frame 17 contacts with the cap top fabric blank 2a. Then, the molding device 11 continues to vertically move downwards, and the base 12 applies pressure to the spring device 16 downwards along the guide rod 15 passing through the through-hole 12a. The pressure of the spring device 16 is applied to the holding frame 17 so that the periphery of the cap top fabric blank 2a may be held between the holding frame 17 and the uppermost surface of the housing 22 to uniformly enter the cap top fabric blank 2a into the chamber 23 at a controllable speed.

As illustrated in FIG. 5d, the molding device 11 continues to vertically move downwards, and at this time, the punch 13 begins to contact with the cap top fabric blank 2a and enters into the chamber 23 of the support device 21. Since the holding frame 17 holds the peripheral portion of the cap top fabric blank 2a, the downward movement of the punch 13 is performed so that the cap top fabric blank 2a is stretched downwards to pass through the opening 24 at a controllable speed to enter into the chamber 23.

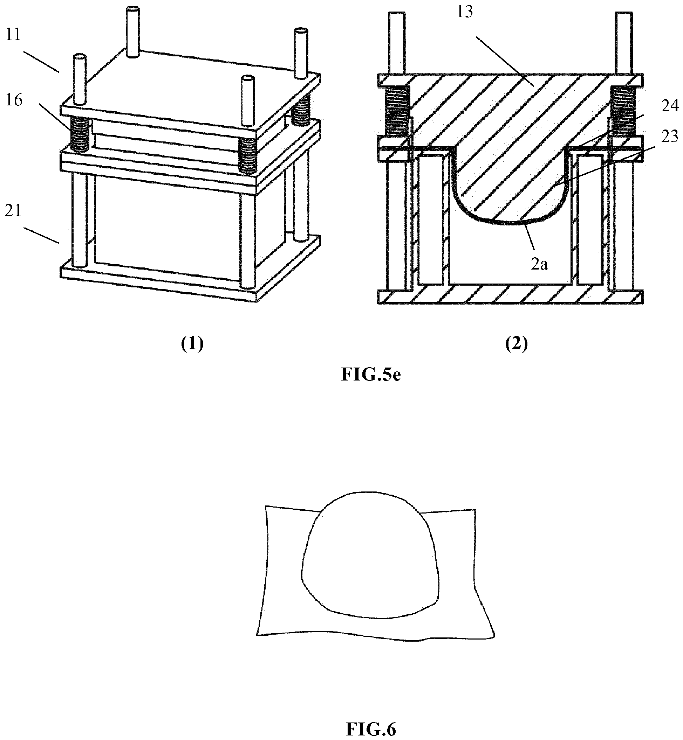

The molding device 11 continues to vertically move downwards until the spring device 16 is fully compressed, and at this time, reaches the cap top molding position of the molding device 11, as shown in FIG. 5e. The molding device 11 stays in the cap top molding position for a predetermined time such as between 30 seconds and 70 seconds, and the heat amount of the heated punch 13 and the chamber 23 is transferred to the cap top fabric blank 2a. The petrochemical fiber material (e.g., polyester, nylon, spandex, acrylic, etc.) contained in the cap top fabric blank 2a is converted from a high elastic state to a glass state at the temperature equal to or higher than the vitrification temperature thereof and lower than the melting point temperature thereof. At this time, the cap top fabric blank 2a is fully aligned on the outer contour of the punch 13, and the cap top 2 matching with the shape of the punch 13 is formed.

After the cap top 2 has been molded, the driving device (not illustrated) is reversely operated so that the molding device 11 is vertically moved upwards from the cap top molding position to be moved to the initial position. As illustrated in FIG. 6, the cap top 2 is removed from the upper portion of the chamber 23 and naturally cooled, thereby forming the molded cap top 2.

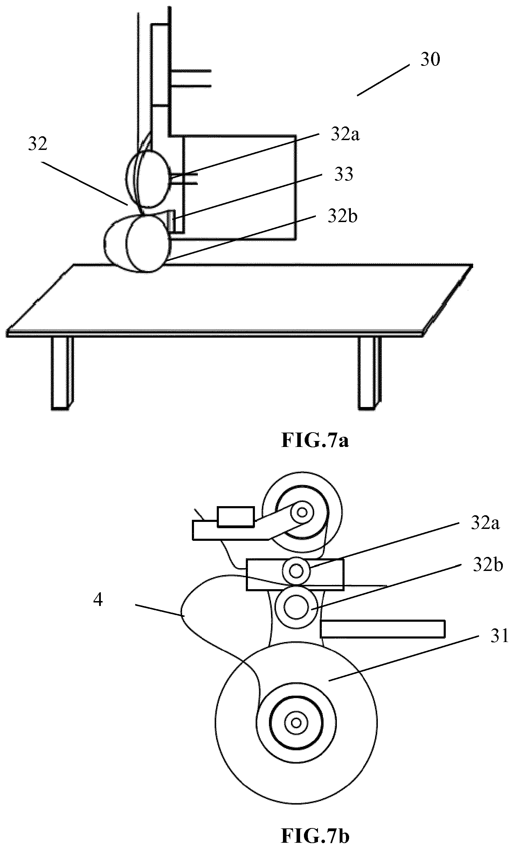

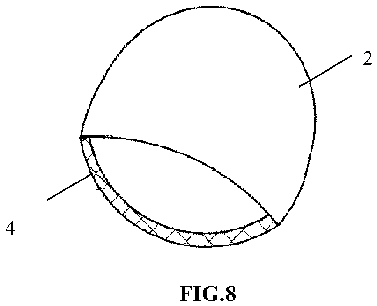

If necessary, the extra portion formed on the bottom of the cap top 2 may be removed. In an embodiment, the extra portion of the bottom of the cap top 2 may be
removed by an adhesive pressing machine 30, and an adhesive pressing strip may be fixed to the edge of the bottom of the cap top 2. As illustrated in FIGS. 7a and 7b, the adhesive pressing machine 30 includes an adhesive pressing strip storage part 31, an adhesive pressing strip compression part 32, and a cutter 33. An adhesive pressing strip 4 is manufactured by aligning a hot melt adhesive agent by using elastic fabric. The width thereof is preferably 6mm, and the adhesive pressing strip storage part 31 stores the unused wound adhesive pressing strip 4. The adhesive pressing strip compression part 32 includes an upper wheel 32a and a lower wheel 32b. By driving the driving device (not illustrated), the upper wheel 32a supplies the adhesive pressing strip 4 from the adhesive pressing strip storage part 31 to the gap between the upper wheel and the lower wheel, and the lower wheel 32b supplies the edge of the bottom of the cap top 2 to the gap between the upper wheel and the lower wheel. As illustrated in FIG. 8, the adhesive pressing strip 4 is thermally welded and fixed to the edge of the bottom of the cap top 2 by the pressure between the upper wheel 32a and the lower wheel 32b. Since the circumference of the bottom of the cap top 2 is usually greater than the actual required circumference thereof, the desired circumference of the cap top may be implemented by the difference of the RPMs between the upper wheel 32a and the lower wheel 32b, in the conventional method, banding is sewn on the bottom of the cap by a sewing machine or a serger, which does not control the circumference of the cap very well. While, before or after the adhesive pressing strip 4 is thermally welded and fixed to the edge of the bottom of the cap top 2, the extra portion of the bottom of the cap top 2 is removed by the cutter 33.

In an embodiment, a decorative process such as embroidery, printing, transfer thermo compression ironing, or decorative flower sewing for the molded cap top 2 is performed. In an embodiment, a lining may be aligned on the front of the inner surface of the molded cap top 2, and the edge of the lining is covered by the adhesive pressing strip to stiffen the cap top 2.

The cap brim 3 is made of a stacked material including a TPU material layer and two fabric layers aligned on the TPU material layer from the upper portion and the lower portion thereof. As illustrated in FIG. 1, one complete cap 1 is formed by cutting the stacked material in a shape of the cap brim to bind around it, then sewing the cap top 2 and the desired cap brim 3 together, and adding an elastic bead strip. The conventional cap brim is made of hard plastic, which may not be folded, and the folded marks are easy to occur, but the cap brim 3 has excellent elastic recovery to be foldable together with the cap top 2, and thereby the cap 1 may be carried in a plastic container or other packing bags, and after unfolded, the cap 1 is restored to its original shape, thereby maintaining the good shape of the cap.

In the method, the molding of the cap top may save the manufacturing time and the manufacturing cost without the cap piece splitting, bonding and sewing process, or opening sewing process, or the process of extruding the fabric after heating the fabric of the related art. The cap top of the cap of the present disclosure may be manufactured in various types of caps, and may be selected from various raw materials. In addition, in the cap top stretching process, the width of the gap between the punch 13 and the opening 24 is uniformly controlled between 0.6mm and 3mm, such that the punch 13 may uniformly stretch downwards the cap top fabric blank 2a, and the cap top may not be wrinkled. The cap top manufactured according to the method is a seamless cap top without seams, is fully in close contact with the shape of the user's head, and is made of a breathable material, thereby improving the beauty and the comfort when worn.

Throughout the specification, the description of "one embodiment," "an alternative embodiment," "one or a plurality of embodiments," or "an embodiment" means that at least one embodiment of the present disclosure includes a specific feature, structure, material or characteristic described in the embodiment in connection with the embodiment. Therefore, words such as "in one or a plurality of embodiments," "in a specific embodiment, " "in one embodiment, " or "in an embodiment" described in a plurality of positions throughout the specification does not necessarily refer to the same embodiment of the present disclosure. In addition, the specific feature, structure, material, or characteristic may be combined in any suitable method in one or a plurality of embodiments.

While the present disclosure has been described with reference to specific embodiments, it is to be understood that such embodiments are merely illustrative of the principles and the applications of the present disclosure. Those skilled in the art of the present disclosure will appreciate that various changes and modifications may be made in the method and the device of the present disclosure without departing from the spirit and scope of the present disclosure. Accordingly, the present disclosure includes changes and modifications thereof within the scope of the claims and their equivalents.

## Claims

1. A method for manufacturing a cap, wherein the cap comprises a seamless cap top without seams and a cap brim bonded to the seamless cap top, wherein the seamless cap top is integrally molded by hot-stretching one flat knitted fabric blank by a cap top molding machine, wherein the knitted fabric blank comprises a vitrification-available petrochemical fiber material, and wherein the cap top molding machine comprises a punch; a chamber facing the punch and opened to receive the punch; and a fabric holding member for holding the knitted fabric blank in a cap top molding process, the method for manufacturing the cap comprising:
heating the punch at the temperature equal to or higher than the vitrification temperature of the petrochemical fiber material and lower than the melting point temperature of the petrochemical fiber material;
seating so that the knitted fabric blank fully covers the opened opening of the chamber;
stretching the knitted fabric blank in a shape matching with the outer contour of the punch by moving the punch toward the inside of the chamber through the opening of the chamber until the punch reaches a cap top molding position, while the periphery portion of the knitted fabric blank is held by the fabric holding member;
staying the punch at the cap top molding position for a predetermined time;
cooling it by moving the punch from the inside of the chamber to the outside thereof, and removing the molded cap top from the upper portion of the chamber; and
forming a cap by bonding the cap top and the cap brim together.

2. The method for manufacturing the cap of claim 1, wherein during the stretching of the knitted fabric blank, a gap is present between the punch and the opening, and the width of the gap is uniformly maintained.

3. The method for manufacturing the cap of claim 2, wherein the width of the gap is controlled between 0.6mm and 3mm during the stretching of the knitted fabric blank.

4. The method for manufacturing the cap of claim 1, wherein while the punch stays at the cap top molding position, the petrochemical fiber material is converted from a high elastic state to a glass state at the temperature equal to or higher than the vitrification temperature thereof and lower than the melting point temperature thereof so that the knitted fabric blank is fully aligned on the outer contour of the punch.

5. The method for manufacturing the cap of claim 1, wherein the predetermined time is 30 seconds to 70 seconds.

6. The method for manufacturing the cap of claim 1, wherein the bonding comprises sewing the cap brim and the cap top together.

7. The method for manufacturing the cap of any one of claims 1 to 6, wherein the chamber is heated at the temperature equal to or higher than the vitrification temperature of the petrochemical fiber material and lower than the melting point temperature of the petrochemical fiber material, while heating the punch.

8. The method for manufacturing the cap of any one of claims 1 to 6, wherein before the seating, the knitted fabric blank is cut into the shape and the size suitable for holding the knitted fabric blank by the fabric holding member.

9. The method for manufacturing the cap of any one of claims 1 to 6, wherein before the seating, water is sprayed to the knitted fabric blank.

10. The method for manufacturing the cap of any one of claims 1 to 6, wherein after the cooling and before the bonding, the extra portion of the bottom of the cap top is removed.

11. The method for manufacturing the cap of any one of claims 1 to 6, further comprising a decorative process such as embroidery, printing, transfer thermo compression ironing, or decorative flower sewing for the cap top, after the cooling and before the bonding, or after the bonding.

12. The method for manufacturing the cap of any one of claims 1 to 6, wherein after the cooling and before the bonding, a lining is aligned inside the cap top, and the edge of the lining is covered by an adhesive pressing strip to stiffen the cap top.

13. The method for manufacturing the cap of any one of claims 1 to 6, wherein the knitted fabric blank comprises a single layer or a plurality of layers of knitted fabrics.

14. The method for manufacturing the cap of claim 13, wherein the single layer or at least one layer of the plurality of layers of knitted fabrics has the vitrification-available petrochemical fiber material.

15. The method for manufacturing the cap of claim 14, wherein the single layer or at least one layer of the plurality of layers of knitted fabrics has 5% to 100% contents of the vitrification-available petrochemical fiber material.

16. The method for manufacturing the cap of any one of claims 1 to 6, wherein the vitrification-available petrochemical fiber material is selected from a group consisting of polyester, nylon, spandex, and acrylic.

17. The method for manufacturing the cap of any one of claims 1 to 6, wherein after the cooling and before the bonding, the adhesive pressing strip is fixed to the edge of the bottom of the cap top by an adhesive pressing machine.

18. The method for manufacturing the cap of claim 17, wherein the adhesive pressing machine comprises an upper wheel and a lower wheel, and the upper wheel supplies the adhesive pressing strip to a gap between the upper wheel and the lower wheel, and the lower wheel supplies the edge of the bottom of the cap top to the gap between the upper wheel and the lower wheel.

19. The method for manufacturing the cap of claim 18, wherein the RPM of the upper wheel and the RPM of the lower wheel are different from each other.

20. The method for manufacturing the cap of claim 17, wherein the adhesive pressing strip is manufactured by aligning a hot melt adhesive agent by using elastic fabric or banding.

21. The method for manufacturing the cap of any one of claims 1 to 6, wherein the cap brim is made of a stacked material comprising a TPU material layer, and two fabric layers aligned on the TPU material layer from the upper portion and the lower portion thereof.

22. A cap manufactured by the method for manufacturing the cap of any one of claims 1 to 21.

23. A cap comprising: a seamless cap top without seams integrally molded by hot-stretching one flat knitted fabric blank comprising a vitrification-available petrochemical fiber material; and a cap brim bonded to the seamless cap top.

24. The cap of claim 23, wherein a lining is aligned inside the cap top, and an adhesive pressing strip for covering the edge of the lining is provided to stiffen the cap top.

25. The cap of claim 23, wherein the cap top is provided with a decorative member such as embroidery, printing, transfer thermo compression ironing, or sewed decorative flower.

26. The cap of any one of claims 23 to 25, wherein the cap top is a seamless cap top integrally molded by hot-stretching the flat knitted fabric blank at the temperature equal to or higher than the vitrification temperature of the petrochemical fiber material and lower than the melting point temperature of the petrochemical fiber material.

27. The cap of any one of claims 23 to 25, wherein the knitted fabric blank comprises a single layer or a plurality of layers of knitted fabrics.

28. The cap of claim 27, wherein the single layer or at least one layer of the plurality of layers of knitted fabrics has the vitrification-available petrochemical fiber material.

29. The cap of claim 28, wherein the single layer or at least one layer of the plurality of layers of knitted fabrics has 5% to 100% contents of the vitrification-available petrochemical fiber material.

30. The cap of any one of claims 23 to 25, wherein the vitrification-available petrochemical fiber material is selected from a group consisting of polyester, nylon, spandex, and acrylic.

31. The cap of any one of claims 23 to 25, wherein the adhesive pressing strip is fixed to the edge of the bottom of the cap top.

32. The cap of claim 31, wherein the adhesive pressing strip is manufactured by aligning a hot melt adhesive agent by using elastic fabric or banding.

33. The cap of any one of claims 23 to 25, wherein the cap brim is made of a stacked material comprising a TPU material layer, and two fabric layers aligned on the TPU material layer from the upper portion and the lower portion thereof.

34. A cap top molding machine for manufacturing a seamless cap top without seams in which the seamless cap top is integrally molded by hot-stretching one flat knitted fabric blank, and the knitted fabric blank comprises a vitrification-available petrochemical fiber material, the cap top molding machine comprising:
a molding device, wherein the molding device comprises a base; a punch fixed to the lower portion of the base, and for hot-stretching the knitted fabric blank of the seamless cap top in a desired shape by providing the shape matching with the seamless cap top; and a fabric holding member slidably connected to the base, and for holding the periphery of the cap top knitted fabric blank in a cap top molding process, and
a support device, wherein the support device is disposed on the vertical lower portion of the molding device, and comprises a housing and a chamber inwards recessed and opened from the housing, and the opening of the chamber faces the punch, and the chamber fully receives the punch entering through the opening.

35. The cap top molding machine of claim 34, wherein in the process of hot-stretching the knitted fabric blank, the punch enters the chamber through the opening, a gap is present between the punch and the opening, and the width of the gap is uniformly maintained.

36. The cap top molding machine of claim 35, wherein in the process of hot-stretching the knitted fabric blank, the width of the gap is controlled between 0.6mm and 3mm.

37. The cap top molding machine of any one of claims 34 to 36, wherein the fabric holding member comprises a holding frame for holding the periphery of the cap top knitted fabric blank in the cap top molding process; a guide rod fixed to the holding frame, and for guiding so that the holding frame vertically moves with respect to the base; and a spring device installed between the base and the holding frame.
